# EUROPÄISCHE PATENTSCHRIFT

(11) **EP 3 073 166 B1**
(45) Veröffentlichungstag und Bekanntmachung des Hinweises auf die Patenterteilung: **17.05.2017**
(21) Anmeldenummer: 16156810.0
(22) Anmeldetag: 23.02.2016
(51) Int. Cl.: F16L 23/028, F16L 23/032, F16L 47/14

(54) **FLANSCHVERBINDUNG**
FLANGE CONNECTION
RACCORD À BRIDE

(30) Priorität: 27.03.2015 DE 102015104718
(43) Veröffentlichungstag der Anmeldung: 28.09.2016
(73) Patentinhaber: Reinert - Ritz GmbH, 48531 Nordhorn (DE)
(72) Erfinder: Reinert, Karl-Albert, 49733 Haren-Emmeln (DE); Haasler, Hans Albert, 49828 Neuenhaus (DE)
(74) Vertreter: Ostriga Sonnet Wirths & Vorwerk

(56) Entgegenhaltungen:
- EP-A1- 2 194 305
- EP-A2- 0 840 049
- WO-A1-93/17268
- WO-A1-2006/045887
- DE-T2- 69 532 999
- US-B1- 6 260 853

## Beschreibung

Die Erfindung betrifft eine Flanschverbindung für Rohrleitungen oder Armaturen aus Kunststoff, mit einem Ringbund aus Kunststoff, welcher eine axialweisende Dichtfläche und eine axialweisende Flanschanlagefläche ausbildet sowie einen zylindrischen Rohrabschnitt aufweist, mit einem Flanschring, welcher eine Vielzahl von Axialbohrungen zur Aufnahme von Schraubbolzen aufweist und eine axial weisende Ringbundanlagefläche ausbildet.

Flanschverbindungen sind eine gängige Technik, um Armaturen oder Rohre untereinander sowie Rohre und Armaturen miteinander zu verbinden. Hierzu werden die Dichtflächen zweier Ringbunde aneinander gesetzt, ggf. unter Zwischenlage einer Dichtung. An die jeweilige Flanschanlagefläche, die auf der der Dichtfläche abgewandten Seite des Ringbundes befindlich ist, wird ein Flanschring angelegt. Beide Flanschringe werden über Schraubbolzen gegeneinander verspannt.

US 6,260,853 B1 zeigt eine unter anderem für Kunststoffrohe geeignete Flanschverbindung, bei welcher Flanschringe mit einem axial breiten, radial innenliegenden Abschnitt und einem axial schmalen, radial außen liegenden Abschnitt Verwendung finden. Zwischen der senkrecht zur Rohrlängsachse ausgerichteten Flanschanlagefläche des Ringbundes und der Ringbundanlagefläche des Flanschringes öffnet sich ein Winkel radial nach außen. Beim Anziehen von Befestigungsschrauben läuft zunächst der axial breite Abschnitt der Flanschringe auf den Ringbund auf und bringt so rohrnah Andruckkräfte ein.

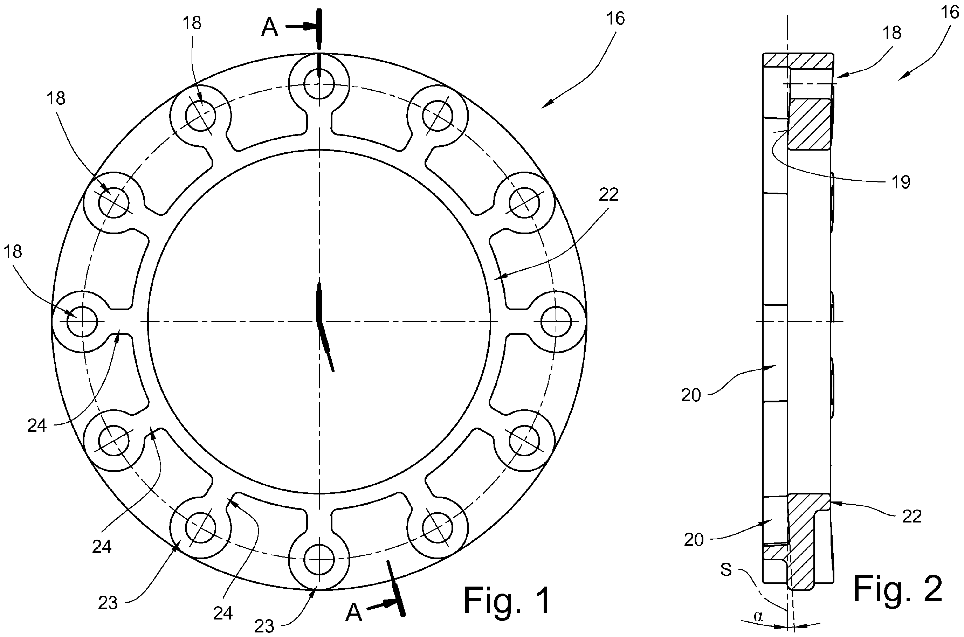

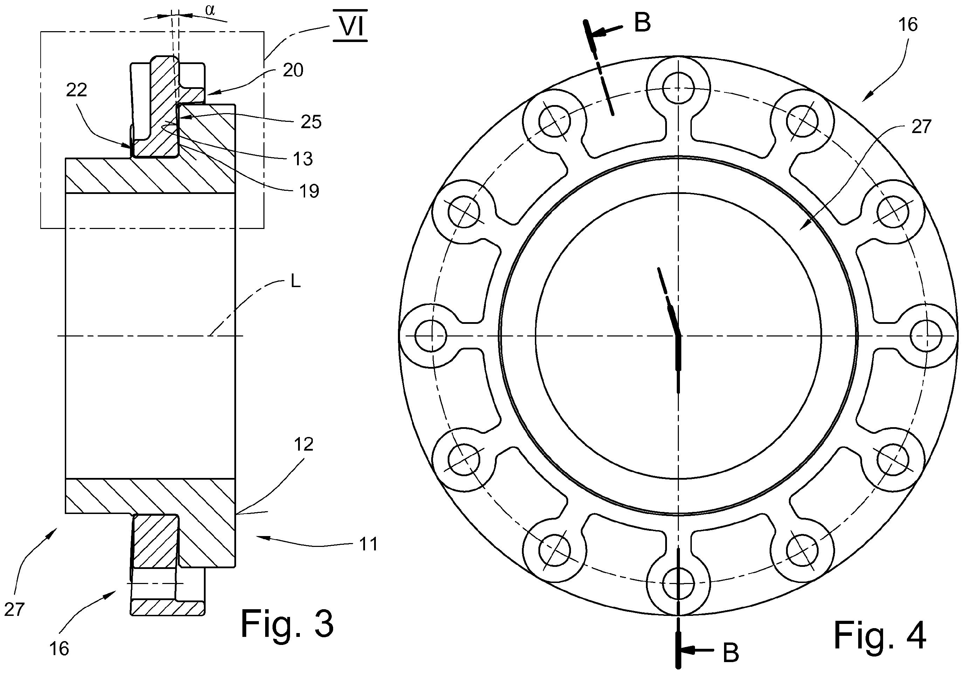

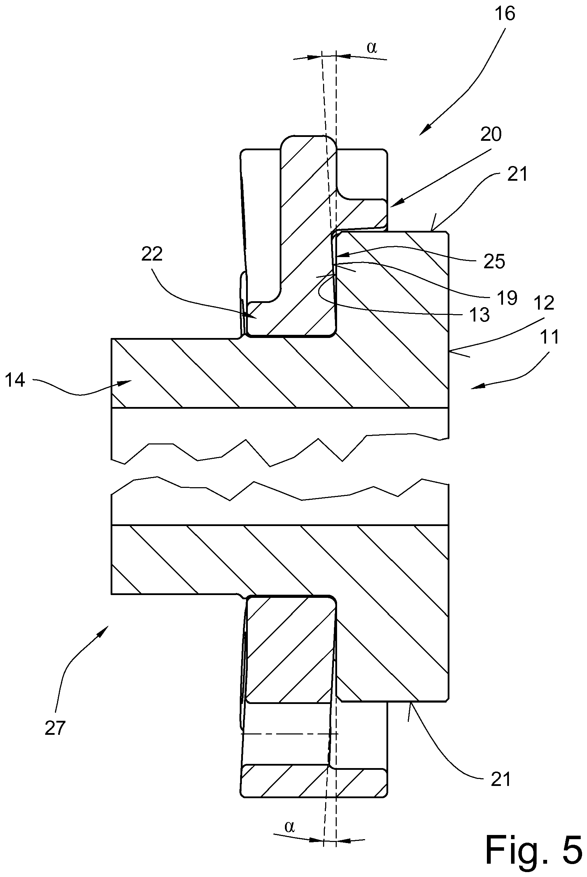

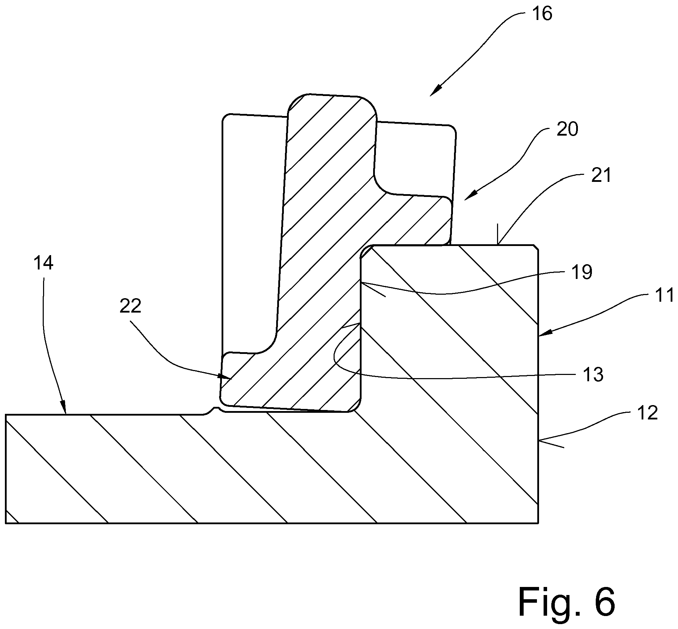

Auf ähnliche Weise werden in den Ausführungsformen nach Figuren 5 und 6 in DE 695 32 999 T2 rohrnah erhöhte Andruckkräfte eingeleitet. Alternativ schlägt diese Veröffentlichung in Fig. 2 einen Zwischenring zwischen Flanschring und Ringbund vor, welcher auch einstückig am Flanschring angeformt sein kann. Dieser Zwischenring wird rohrnah gegen den Ringbund gedrückt und leitet dort die Andruckkräfte ein. In der Ausführungsform gemäß Fig 3 wird eine Federscheibe zwischen Flanschring und Ringbund gelegt, welche die Andruckkräfte im rohrnahen Bereich des Ringbundes erhöht.

WO 93/17268 A1 offenbart eine Flanschverbindung, deren Ringbunde im Bereich der gegenseitigen Anlagefläche konisch geformt sind. Dabei stehen die radial inneren Bereiche axial vor, wohingegen radial äußere Bereiche zurückgezogen sind. Die gegenseitigen Anlageflächen der Ringbunde treffen mit ihren voreilenden Abschnitten aufeinander, so dass dort erhöhte Andruckkräfte realisiert werden.

Diese Technik wird sowohl für Stahl-Ringbunde wie auch für Kunststoff-Ringbunde genutzt, wobei jedoch im Rohrleitungsbau verstärkt Kunststoffrohre und auch Kunststoffarmaturen aufgrund geringerer Korrosionsanfälligkeit Verwendung finden. Daher hat es sich in der Vergangenheit gezeigt, dass an Flanschverbindungen für Kunststoffrohre und -armaturen insbesondere dann besondere Anforderungen gestellt werden, wenn hohe Druck- und Zugspannungen auftreten. In diesem Fall neigt thermoplastischer Kunststoff zum Fließen, so dass es ungleich schwieriger ist, die vom Flansch aufgebrachten Kräfte gleichförmig über die gesamte Dichtungsbreite auf die zwischen den Ringbunden angeordnete Dichtung zu übertragen.

Um dem besonderen Werkstoffverhalten bei Kunststoff-Flanschverbindungen Rechnung zu tragen, hat die Anmelderin mit der EP0793049 A1 oder der DE 10 2006 049 594 A1 Flanschverbindungen geschaffen, bei denen die zueinander gewandten Flanschringe eine Art Kammer bilden, in welcher die Bunde gehalten sind.

In der EP 0793049 A1 verzichtet die Flanschverbindung auf den bis dato üblichen, konischen Übergangsabschnitt zwischen dem zylindrischen Rohrabschnitt und dem Ringbund. Sie schafft einen Ringbund mit einer Kehlnut, in welchen der Ringwulst eines Flanschringes eingreift. Einerseits wird durch den verbesserten Ringbund die Krafteinleitung in die Flanschverbindung verbessert und diese gegen ein keilförmiges Aufspreizen des Dichtspaltes unter Innendruck weitestgehend resistent ausgeführt. Diese Wirkung wird durch das Zusammenwirken von Kehlnut und Ringwulst weiter verbessert, indem eine formschlüssige und sichere Zuordnung des Flanschringes zum Ringbund geschaffen ist. Die hierdurch entstehende Kammer hält den Kunststoff und sichert so auch eine unter hohen Innendrücken stehende Flanschverbindung.

Um Rohrinnendrücken jenseits von 16 bar sicher standzuhalten, wurde die sogenannte Kehlnutflanschverbindung durch die DE 10 2006 049 594 A1 wesentlich verbessert. Durch eine Verbesserung der Ringbund- und Flanschgeometrien führt die unter Rohrinnendrücken jenseits von 16 bar wieder auftretende Fließbewegung des Kunststoffes zu einer Selbstkammerung, so dass eine sichere Flanschverbindung zwischen Kunststoff-Ringbunden gewährleistet ist.

Der vorzitierte Stand der Technik ist in jeder Hinsicht vorteilhaft, da er es ermöglicht, den Werkstoff Kunststoff im Rohrleitungsbau mit hohen Innendrücken zu belasten. Jedoch gibt es Situationen, in welchen die notwendige Ausgestaltung der Ringbunde mit Kehlnut und Schrägflächen nicht gewährleitstet werden kann. Deshalb ist es Aufgabe der Erfindung, eine Flanschverbindung für Rohrinnendrücke von bis zu 10 bar, bis 25 bar zu schaffen, die einerseits das Fließverhalten des Kunststoffes berücksichtigt, andererseits eine übermäßige Bearbeitung des Ringbundes überflüssig macht.

Gelöst wird die Aufgabe von einer Flanschverbindung mit den Merkmalen des Anspruches 1, insbesondere mit den kennzeichnenden Merkmalen, wonach der Flanschring aus einem rückstellelastischen Kunststoff gebildet ist, der Flanschring nach Art einer Tellerfeder geformt ist, die Flanschanlagefläche des Ringbundes im Wesentlichen rechtwinklig zur Rohrlängsachse ausgerichtet ist und die Ringbundanlagefläche des Flanschringes mit der Flanschanlagefläche des Ringbundes einen Winkel einschließt, der sich ausgehend vom zylindrischen Rohrabschnitt des Ringbundes radial nach außen öffnet.

Beim Verspannen der Flanschringe gegeneinander laufen zuerst die rohrabschnittsnahen Bereiche des Flanschrings auf die Flanschanlagefläche des Ringbundes auf. Mit fortgesetztem Anziehen der Schraubbolzen vergrößert sich die gegenseitige Anlagefläche zwischen Ringbund und Flanschring. Durch die gegenüber der Ringbundanlagefläche geneigte Ausbildung der Ringbundanlagefläche wird eine erhöht Anpresskraft im Bereich des zylindrischen Rohrabschnitts auf die Ringbundanlagefläche aufgebraucht und wirkt der dort vorhandenen Tendenz zum keilförmigen Aufweiten unter Rohrinnendruck entgegen.

Der Flanschring ist aus einem rückstellelastischen Material, nämlich aus einem speziellen Kunststoff gefertigt. Aufgrund der Rückstellelastizität wirkt der Flanschring auf den Ringbund nach Art einer Tellerfeder und drängt - wie eben vorbeschrieben - die Ringbunde im Bereich des Übergangs hin zum zylindrischen Rohrabschnitt mit einer höheren Anpresskraft gegeneinander. Die Rückstellelastizität verhindert jedoch eine plastische Verformung des Flanschringes, so dass die vorteilhafte Wirkung auch aufrechterhalten bleibt, wenn hohe Anzugsmomente auf die Schraubbolzen wirken.

Die EP 0 840 049 A2 offenbart eine der Lehre der Erfindung konträre Lösung, die lediglich den Anschein einer gleichartigen Ausgestaltung erweckt. Die dortige, primär für PVC-Rohrverbindungen zu nutzende Flanschverbindung zeigt einen Ringbund, dessen Flanschanlagefläche aus der senkrechten in Richtung Dichtfläche ausgestellt ist. Der Flanschring kann bei zu hoher Belastung in Richtung Flanschanlagefläche des Ringbundes verkippen, wodurch die rohrnahen Bereiche des Ringbundes zum Schutz vor Beschädigung entlastet werden. Die Lösung der EP 0 840 049 A2 entlastet demzufolge gerade die Bereiche des Ringbundes, die mit den Mitteln der Erfindung mit einer erhöhten Anpresskraft beaufschlagt werden.

WO 2006/045887 A1 offenbart eine Flanschverbindung, bei welcher die Flanschringe aus mehreren, axial hintereinander angeordneten Ringsegmenten gebildet sind. Dies erlaubt ein Verkippen der einzelnen Segmente, so dass sich die Flanschringe an eine Neigung der Ringbunde anpassen können. Die dort im Bereich der Verschraubungen angeordneten Elastomerelemente dienen als Montagehilfe und sind aufgrund Ihrer Anordnung und Ausgestaltung nicht in der Lage, rohrnah erhöhte Andruckkräfte auf den Ringbund aufzubringen.

Es hat sich herausgestellt, dass die vorteilhafte Wirkung des erfindungsgemäßen Flanschringes am stärksten ist, wenn der Winkel zwischen Flanschanlagefläche und einer vertikal zum Rohrabschnitt gerichteten Ringbundanlagefläche zwischen 1 Grad und 7 Grad, insbesondere zwischen 1 Grad und 5 Grad, bevorzugt 3 Grad beträgt.

Es ist ferner vorgesehen, dass der Flanschring an seiner Ringbundanlagenfläche einen den Ringbund außenumfänglich übergreifenden, axial weisenden Kragen ausbildet, wobei im Zweifelsfall vorgesehen ist, der axial weisende Kragen Ausnehmungen aufweist, die mit den Axialbohrungen zur Aufnahme von Schraubbolzen fluchten.

Der axialweisende Kragen, welcher den Ringbund außenumfänglich übergreift, stützt den Flanschring beim Herstellen der Flanschverbindung am Ringbund ab. Insbesondere bei Flanschverbindungen, bei welchen die Schraubbolzen den Ringbund radial außen übergreifen hilft dies, die rohrabschnittsnah einzubringende höhere Kraft aufrechtzuerhalten, indem ein übermäßiges Verkippen des Flanschringes vermieden wird.

Schließlich ist vorgesehen, dass der Flanschring auf seiner dem Ringbund abgewandten Seite einen axial weisenden, insbesondere innenumfänglich angeordneten Versteifungs-Kragen aufweist, der insbesondere zur Anlage am zylindrischen Rohrstück vorgesehenen ist. Über diesen Kragen kann die Steifheit eines rückstellelastisch ausgebildeten Flanschringes verstärkt werden, so dass größere Kräfte rohrabschnittsnah in den Ringbund eingeleitet werden können.

Vorgesehen ist ferner, dass der Flanschring auf seiner dem Ringbund abgewandten Seite ringförmige Materialverstärkungen aufweist, die jede Axialbohrung umgeben.

Weitere Vorteile der Erfindung sowie ein besseres Verständnis derselben folgt aus dem nun beschriebenen Ausführungsbeispiel. Es zeigen:
- Figur 1: eine Aufsicht auf einen Flanschring einer erfindungsgemäßen Flanschverbindung auf die dem Ringbund abgewandte Seite,
- Figur 2: eine Schnittansicht durch den Flanschring gemäß Figur 1 entsprechend Schnittlinie A-A,
- Figur 3: eine Schnittansicht der Anordnung gemäß Figur 4 entsprechend Schnittlinie B-B,
- Figur 4: eine Ansicht auf den Flanschring gemäß Figur 1 nebst Vorschweißbund,
- Figur 5: eine vergrößerte Darstellung gemäß Figur 3,
- Figur 6: eine vergrößerte Teildarstellung gemäß Ausschnittskreis VI in Figur 3 mit Flanschring in verspanntem Zustand,
- Figur 7: eine erfindungsgemäße Flanschverbindung zweier Rohrstücke,
- Figur 8: eine Ansicht auf die Ringbundanlagefläche des Flanschringes gemäß Figur 1,
- Figur 9: eine Ansicht auf die dem Ringbund abgewandte Fläche einer zweiten Ausführungsform eines Flanschringes der erfindungsgemäßen Flanschverbindung,
- Figur 10: eine Schnittdarstellung des Flanschringes gemäß Schnittlinie C-C in Figur 9,
- Figur 11: die Ansicht auf den Flanschring entsprechend Figur 9, jedoch mit Darstellung eines Vorschweißbundes,
- Figur 12: eine Schnittdarstellung gemäß Schnittlinie D-D in Figur 11.

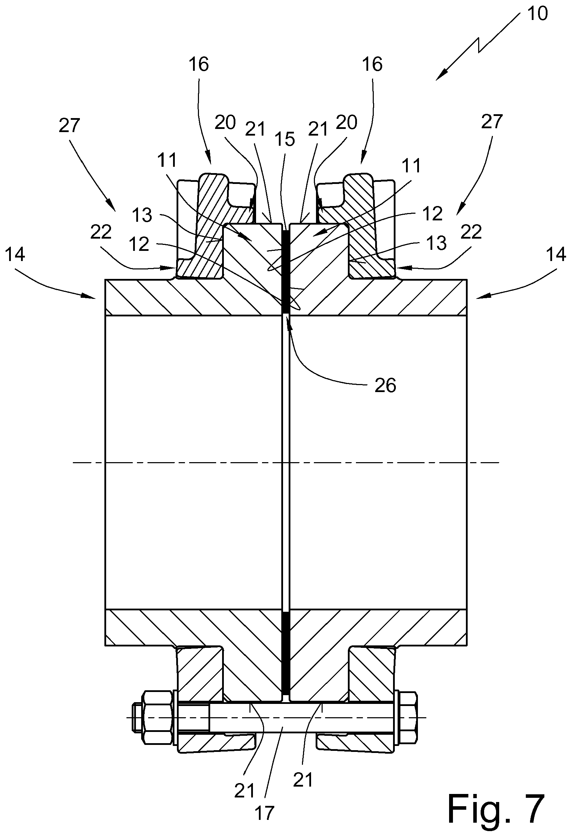

In den Figuren ist eine erfindungsgemäße Flanschverbindung insgesamt mit der Bezugsziffer 10 versehen. Sie ist in ihrer Gesamtheit beispielsweise in Figur 7 dargestellt. Sie umfasst zwei Ringbunde 11 aus Kunststoff, die beispielsweise als Vorschweißbunde 27 für Kunststoffrohre oder Kunststoffarmaturen ausgebildet sein können. Diese Ringbunde verfügen jeweils verfügen über eine axialweisende Dichtfläche 12 sowie eine der jeweiligen Dichtfläche 12 abgewandte, ebenfalls axialweisende Flanschanlagefläche 13. Ein zylindrischer Rohrabschnitt 14 erstreckt sich in die der jeweiligen Dichtfläche 12 entgegengesetzte Richtung, um mit einem Kunststoffrohr oder einer Kunststoffarmatur verbunden zu werden. Zwischen den einander zugewandten Dichtflächen 12 der beiden in Figur 7 dargestellten Ringbunde 11 ist eine Dichtung 15 angeordnet, die einen Fluidaustritt entlang der gegenseitigen Anlagefläche der Ringbunde 11 verhindert.

Jeder Ringbund 11 trägt ein Losflansch in Form eines Flanschringes 16. Zur Herstellung der Flanschverbindung werden die Flanschringe über Schraubbolzen 17 gegeneinander verspannt.

Der Flanschring 16 ist zunächst in den Figuren 1 und 2 gezeigt. Figur 1 zeigt eine Stirnansicht des Flanschringes auf die der Flanschanlagefläche abgewandte Seite. Figur 2 zeigt eine Schnittansicht gemäß Schnittlinie A-A in Figur 1.

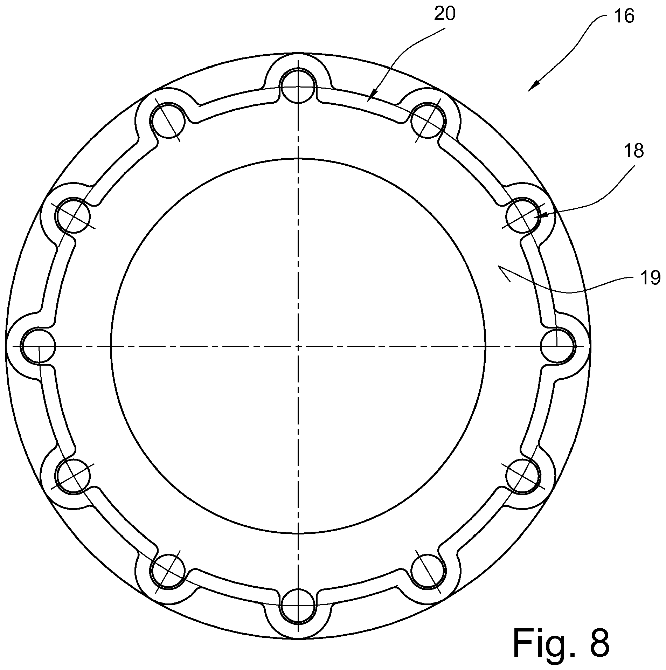

Der Flanschring 16 umfasst zunächst eine Vielzahl von Axialbohrungen 18 zur Aufnahme der vorwähnten Schraubbolzen 17. Er bildet eine Ringbundanlagefläche 19 aus, die axial weist und der Flanschanlagefläche 13 des Ringbunds 11 zugewandt ist. Die Ringbundanlagefläche 19 wird radial nach außen durch einen Stützkragen 20 begrenzt. Dieser Stützkragen 20 überfängt, wie beispielsweise aus Figur 6 und 7 hervorgeht, die radial nach außen weisende Ringbund-Mantelfläche 21. Im Bereich der Axialbohrungen 18 ist der Stützkragen 20 unterbrochen und torbogenartig um die Axialbohrungen 18 herumgeführt. Auf die Weise behält der Stützkragen trotz seiner im Bereich der Axialbohrungen 18 konstruktiv notwendigen Ausnehmungen die erforderliche Stabilität. Hierzu wird auch auf Figur 8 verwiesen.

Auf der der Ringbundanlagefläche 19 abgewandten Seite weist der Flanschring einen radial innenliegenden Versteifungskragen 22 auf, der in diesem Bereich den Flanschring 16 axial verstärkt. Im Bereich der Axialbohrungen 18 ist der Flanschring 16 auf seiner dem Ringbund 11 abgewandten Seite mit ringförmigen Materialverstärkungen 23 versehen, die die jeweilige Axialbohrung 18 vollumfänglich umgeben und der Anlage der Schraubbolzen-Köpfe dienen. Zwischen diesen Materialverstärkungen 23 und dem Versteifungskragen 22 sind Versteifungsstege 24 angeordnet. Da der Flanschring 16 in bevorzugter Weise als Kunststoffspritzgießteil hergestellt ist, bilden die Versteifungsstege 24 werkstoffeinheitlich stoffschlüssige Verbindungselemente zwischen dem Versteifungskragen 22 und dem ringförmigen Materialverstärkungen 23. Aus der Schnittdarstellung der Figur 2 ist ersichtlich, dass die Ringbundanlagefläche 19 gegenüber einer Senkrechten S, deren Bezugsachse die Rohrlängsachse darstellt, sich radial nach außen öffnet. Die Ringbundanlagefläche 19 schließt mit dieser Senkrechten S bzw. mit der Flanschanlagefläche 13 des Ringbundes 11 einen Winkel α ein, der sich ausgehend vom zylindrischen Rohrabschnitt 14 des Ringbundes 11 radial nach außen öffnet. Die Flanschanlagefläche 13 ist bevorzugt vertikal zum Rohrabschnitt 14 gerichtet.

Figur 3 zeigt den Flanschring 16 gemäß Figur 1, angeordnet auf einem Ringbund 11. Figur 4 zeigt diese Anordnung gemäß Schnittlinie B-B.

Wie der Schnittdarstellung nach Figur 3 zu entnehmen ist, ist die Ringbundanlagefläche 19 radial innen in Richtung Flanschanlagefläche 13 ausgestellt. Die Flanschanlagefläche 13 des Ringbundes 11 ist im Wesentlichen rechtwinklig zu einer Rohrlängsachse L ausgerichtet, die Ringbundanlagefläche 19 des Flanschringes 16 ist in um etwa 1 bis 7 Grad, insbesondere um 3 Grad aus der Lotrechten ausgestellt. Deshalb schließen Flanschanlagefläche 13 und Ringbundanlagefläche 19 miteinander in ungespanntem Zustand einen Winkel α von 1 bis 7 Grad, bevorzugt von 3 Grad miteinander ein, der sich radial nach außen öffnet. Hierdurch entsteht ein Spannspalt 25.

Die gegenüber Figur 3 vergrößerte Darstellung gemäß Figur 5 verdeutlicht diesen Sachverhalt nochmals. Darüber hinaus zeigen die Figuren 4 und 5, dass der Stützkragen 20 die radial weisende Umfangsfläche 21 des Ringbundes 11 überfängt und sich dort abstützt. Der Figur 5 ist darüber hinaus am ehesten zu entnehmen, dass der Flanschring 16 in Anlehnung an eine Tellerfeder ausgebildet ist.

Wird nunmehr durch anziehen der Schraubbolzen 17 die Flanschverbindung gemäß Figur 7 hergestellt, wird der Flanschring 16 rückstellelastisch verformt. Über die Spannkräfte wird die Ringbundanlagefläche 19 vollflächig gegen die Flanschanlagefläche 13 gezogen, so dass sich der Spannspalt 25 schließt.

Die spezielle, tellerfederartige Geometrie des Flanschringes 16 führt in Zusammenspiel mit seiner Rückstellelastizität dazu, dass die Spannkräfte zur Herstellung der Flanschverbindung am stärksten auf den Ringbund 11 wirken, wo der zylindrische Rohrabschnitt 14 in den Bund übergeht. Dies ist gleichzeitig derjenige Bereich, in welchem ein Rohrinnendruck am stärksten auf den Dichtspalt 26 zwischen den Dichtflächen 12 wirkt und diesen tendenziell keilförmig aufweitet. Der erfindungsgemäße Flanschring 16 wirkt durch seine tellerfederartige Geometrie diesen Aufweitungstendenzen wirksam entgegen und schafft so eine sichere Flanschverbindung für Kunststoff-Rohre und -armaturen.

In dem dargestellten Ausführungsbeispiel wird die Spannwirkung durch den Stützkragen 20 des Flanschrings 16 verstärkt. Dieser stützt sich auf dem Ringbund ab und wirkt so einem Verkippen derjenigen Bereiche des Flanschringes 16 entgegen, die nicht über die Ringbundanlagefläche 19 an der Flanschanlagefläche 13 abgestützt sind. Die Elastizitätswerte des Flanschringes 16 lassen sich durch Materialauftrag beeinflussen. Hierzu wurde der Flanschring im Ausführungsbeispiel mit einem zusätzlichen Versteifungskragen 22 sowie Versteifungsstegen 24 auf seiner dem Ringbund 11 abgewandten Seite versehen. Die ringförmigen Materialverstärkungen 23, die die Axialbohrungen 18 umschließen, dienen der Verstärkung des Flanschringes 16 im Bereich der Schraubbolzen 17.

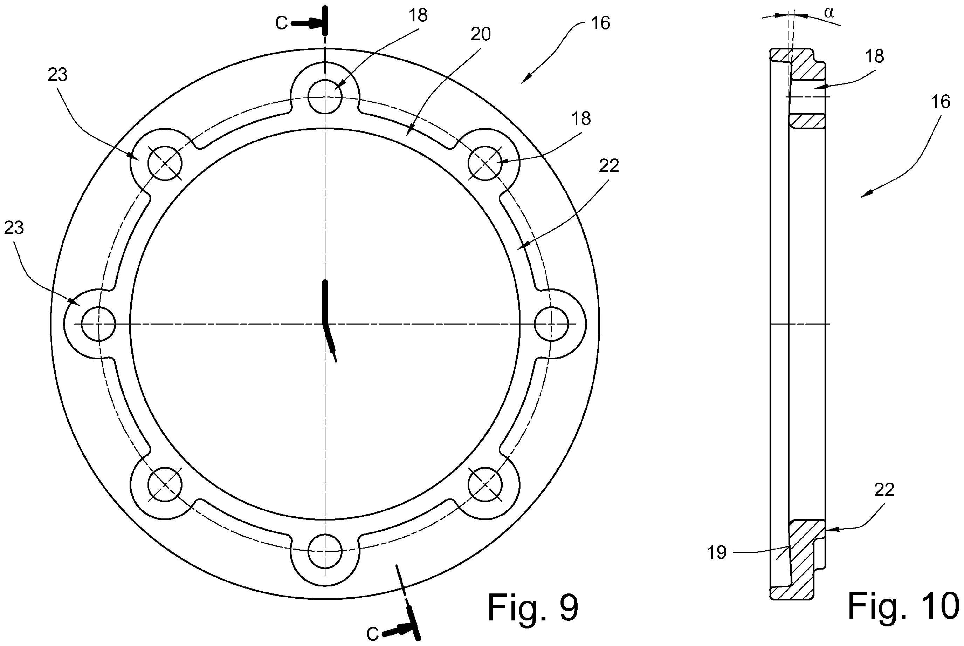

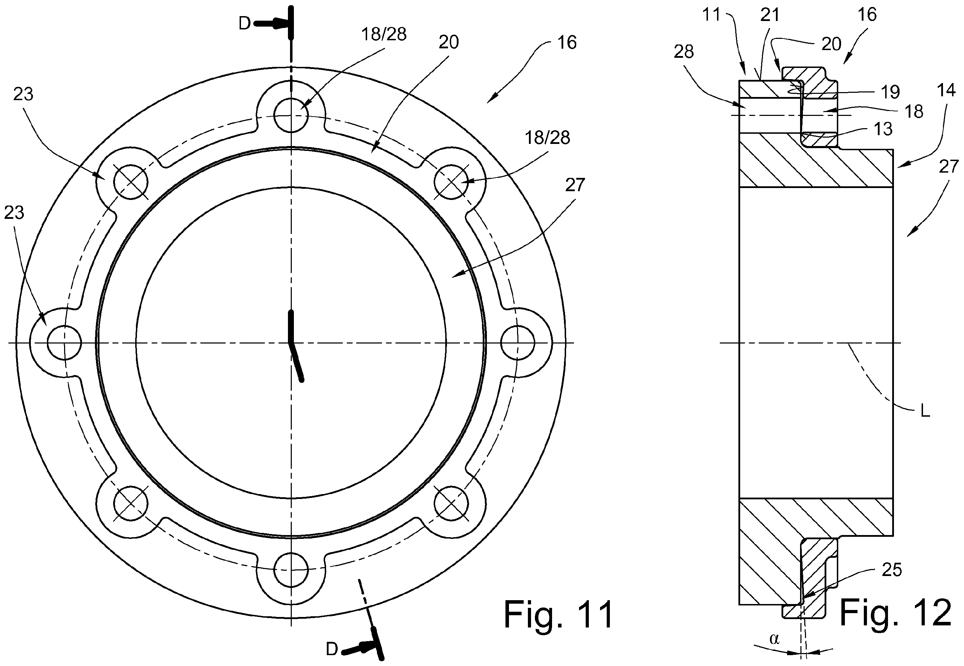

In den Figuren 9 bis 12 ist eine im Detail abweichende Ausführungsform der Erfindung dargestellt. Aus den Figuren 11 und 12 ist entnehmbar, dass der Vorschweißbund 27 mit Durchgangsbohrungen 28 versehen ist. Die Axialbohrungen 18 des Flanschringes 16 sind gegenüber des ersten Ausführungsbeispiels - beispielsweise dargestellt in Figur 1 - radial weiter innen liegend angeordnet. Die Versteifungsstege 24 zwischen dem Versteifungskragen 22 und den ringförmigen Materialverstärkungen im Bereich der Axialbohrungen 18 fehlen. Der Stützkragen 20 hingegen befindet sich bei diesem Ausführungsbeispiel radial außen, außerhalb der Axialbohrungen 18. Deshalb ist der Stützkragen 20 hier ununterbrochen ausgeführt.

Der wesentliche Unterschied zwischen den Ausführungsbeispielen liegt demnach in der Anordnung der Axial- bzw. Durchgangsbohrungen 18/28. Bei diesem zweiten Ausführungsbeispiel werden die Schraubbolzen 17 in nicht dargestellter Weise durch die Axialbohrungen 18 der Flanschringe 16 und die Durchgangsbohrungen 28 der Ringbunde 11 geführt und dann gegeneinander verspannt. Wie vorbeschrieben, schließt sich der Spannspalt 25 beim Verspannen der Flanschringen 16 unter Aufbau einer Rückstellkraft auf Seiten des Flanschringes. Der Stützkragen 20 stützt sich an der Ringbundmantelfläche 21 ab. In so weit gilt also das oben zur Herstellung der Flanschverbindung Gesagte.

In bevorzugter Ausführungsform ist der Flanschring 16 als Kunststoffspritzgießteil gebildet. Er kann jedoch auch aus einem geeigneten rückstellelastischen Metall gefertigt sein. Ergänzend, zeichnerisch nicht dargestellt, ist es denkbar, den erfindungsgemäßen Flanschring 16 an seiner Ringbundanlagefläche mit einem Ringwulst zu versehen, der in eine Kehlnut auf Seiten des Ringbundes 11 eingreift, wie es beispielsweise EP 0 793 049 B1 oder DE 10 2006 049 594 A1 lehren.

### Bezugszeichenliste:

- 10: Flanschverbindung
- 11: Ringbund
- 12: Dichtfläche
- 13: Flanschanlagefläche
- 14: zylindrischer Rohrabschnitt
- 15: Dichtung
- 16: Flanschring
- 17: Schraubbolzen
- 18: Axialbohrung
- 19: Ringbundanlagefläche
- 20: Stützkragen
- 21: Ringbund-Mantelfläche
- 22: Versteifungskragen
- 23: ringförmige Materialverstärkung
- 24: Versteifungssteg
- 25: Spannspalt
- 26: Dichtspalt
- 27: Vorschweißbund
- 28: Durchgangsbohrung

## Patentansprüche

1. Flanschverbindung (10) für Rohrleitungen oder Armaturen aus Kunststoff,
- mit einem Ringbund (11) aus Kunststoff, welcher eine axialweisende Dichtfläche (12) und eine axialweisende Flanschanlagefläche (13) ausbildet sowie einen zylindrischen Rohrabschnitt (14) aufweist,
- mit einem Flanschring (16), welcher eine Vielzahl von Axialbohrungen (18) zur Aufnahme von Schraubbolzen (17) aufweist und eine axial weisende Ringbundanlagefläche (19) ausbildet
**dadurch gekennzeichnet, dass**
- der Flanschring (16) aus einem rückstellelastischen Kunststoff gebildet ist,
- der Flanschring (16) nach Art einer Tellerfeder geformt ist,
- die Flanschanlagefläche (13) des Ringbundes (11) im Wesentlichen rechtwinklig zur Rohrlängsachse (L) ausgerichtet ist,
- die Ringbundanlagefläche (19) des Flanschringes (16) mit der Flanschanlagefläche (13) des Ringbundes (11) einen Winkel (α) einschließt, der sich ausgehend vom zylindrischen Rohrabschnitt (14) des Ringbundes (11) radial nach außen öffnet.

2. Flanschverbindung (10) nach Anspruch 1, **dadurch gekennzeichnet, dass** der Flanschring (16) an seiner Ringbundanlagenfläche (19) einen den Ringbund (11) außenumfänglich übergreifenden, axial weisenden Stützkragen (20) ausbildet.

3. Flanschverbindung (10) nach Anspruch 2, **dadurch gekennzeichnet, dass** der axial weisende Stützkragen (20) Ausnehmungen aufweist, die mit den Axialbohrungen (18) zur Aufnahme von Schraubbolzen (17) fluchten.

4. Flanschverbindung (10) nach einem der Ansprüche 1 bis 3, **dadurch gekennzeichnet, dass** der Flanschring (16) auf seiner dem Ringbund (11) abgewandten Seite einen axial weisenden, innenumfänglich angeordneten Versteifungskragen (22) aufweist.

5. Flanschverbindung (10) nach einem der Ansprüche 1 bis 4, **dadurch gekennzeichnet, dass** der Flanschring (16) auf seiner dem Ringbund (11) abgewandten Seite ringförmige Materialverstärkungen aufweist, die jede Axialbohrung (18) umgeben.

6. Flanschverbindung (10) nach einem der vorhergehenden Ansprüche, **dadurch gekennzeichnet, dass** der Winkel zwischen Flanschanlagefläche (13) und Ringbundanlagefläche (19) zwischen 1 Grad und 7 Grad, insbesondere zwischen 1 Grad und 5 Grad, bevorzugt 3 Grad beträgt.

## Claims

1. Flange connection (10) for pipes or fittings made from plastic,
- with an annular collar (11) made from plastic which forms an axially extending sealing surface (12) and an axially extending flange contact surface (13) and has a cylindrical tubular portion (14),
- with a flange ring (16) which has a plurality of axial bores (18) for accommodating bolts (17) and forms an axially extending annular collar contact surface (19),
**characterised in that**
- the flange ring (16) is made from a resiliently elastic plastic,
- the flange ring (16) is shaped in the manner of a disc spring,
- the flange contact surface (13) of the annular collar (11) is oriented substantially at a right angle to the pipe longitudinal axis (L),
- the annular collar contact surface (19) of the flange ring (16) subtends an angle (α) with the flange contact surface (13) of the annular collar (11) which opens radially outwards starting from the cylindrical tubular portion (14) of the annular collar (11).

2. Flange connection (10) as claimed in claim 1, **characterised in that** the flange ring (16) forms an axially extending support collar (20) extending around the external circumference of the annular collar (11) at its annular collar contact surface (19).

3. Flange connection (10) as claimed in claim 2, **characterised in that** the axially extending support collar (20) has recesses aligned flush with the axial bores (18) for accommodating bolts (17).

4. Flange connection (10) as claimed in one of claims 1 to 3, **characterised in that** the flange ring (16) has an axially extending stiffening collar (22) disposed on the internal circumference on its face remote from the annular collar (11).

5. Flange connection (10) as claimed in one of claims 1 to 4, **characterised in that** the flange ring (16) has annular material reinforcements surrounding each axial bore (18) on its face remote from the annular collar (11).

6. Flange connection (10) as claimed in one of the preceding claims, **characterised in that** the angle between the flange contact surface (13) and annular collar contact surface (19) is between 1 degree and 7 degrees, in particular between 1 degree and 5 degrees, preferably 3 degrees.

## Revendications

1. Raccord à bride (10) pour des conduites tubulaires ou des armatures en plastique avec un épaulement annulaire (11) en plastique, lequel forme une surface d'étanchéité (12) orientée axialement et une surface d'appui pour la bride (13) orientée axialement et comporte aussi une section tubulaire cylindrique (14), avec une bague de bride (16), laquelle comporte une pluralité d'alésages axiaux (18) pour recevoir des boulons filetés (17) et forme une surface d'appui pour l'épaulement (19) orientée axialement, **caractérisé en ce que** :
- la bague de bride (16) est formée à partir d'un plastique à reprise élastique,
- la bague de bride (16) est formée selon le type d'une rondelle-ressort, la surface d'appui pour la bride (13) de l'épaulement annulaire (11) est orientée essentiellement perpendiculairement à l'axe longitudinal du conduit (L),
- la surface d'appui pour l'épaulement (19) de la bague de bride (16) inclut un angle (α) avec la surface d'appui de bride (13) de l'épaulement annulaire (11) qui s'ouvre radialement vers l'extérieur sortant de la section tubulaire (14) cylindrique de l'épaulement annulaire (11).

2. Raccord à bride (10) selon la revendication 1, **caractérisé en ce que** la bague de bride (16) forme au niveau de sa surface d'appui pour l'épaulement (19) une collerette d'appui (20) orientée axialement, saisissant par le dessus périphériquement extérieurement, l'épaulement annulaire (11).

3. Raccord à bride (10) selon la revendication 2, **caractérisé en ce que** la collerette d'appui (20) orientée axialement présente des évidements qui s'alignent avec les alésages axiaux (18) pour recevoir des boulons filetés (17).

4. Raccord à bride (10) selon l'une des revendications 1 à 3, **caractérisé en ce que** la bague de bride (16) présente, sur son côté opposé à l'épaulement annulaire (11), une collerette de renfort (22) disposée périphériquement intérieurement, orientée axialement.

5. Raccord à bride (10) selon l'une des revendications 1 à 4, **caractérisé en ce que** la bague de bride (16) présente, sur son côté opposé à l'épaulement annulaire (11), des renforts de matériau de forme annulaire qui entourent chaque alésage axial (18).

6. Raccord à bride (10) selon l'une des précédentes revendications, **caractérisé en ce que** l'angle entre la surface d'appui de bride (13) et la surface d'appui pour l'épaulement (19) est entre 1 degré et 7 degrés, en particulier entre 1 degré et 5 degrés, de préférence 3 degrés.
